# EUROPÄISCHE PATENTSCHRIFT

(11) **EP 0 735 944 B1**
(45) Veröffentlichungstag und Bekanntmachung des Hinweises auf die Patenterteilung: **15.07.1998**
(21) Anmeldenummer: 95902136.1
(22) Anmeldetag: 09.12.1994
(51) Int. Cl.: B29C 45/68

(54) **FORMSCHLIESSVORRICHTUNG FÜR EINE SPRITZGIESSMASCHINE**
DIE CLAMP FOR AN INJECTION MOULDING MACHINE
DISPOSITIF DE FERMETURE D'UN MOULE POUR MACHINE A MOULER PAR INJECTION

(30) Priorität: 23.12.1993 DE 4344340
(43) Veröffentlichungstag der Anmeldung: 09.10.1996
(73) Patentinhaber: Krauss-Maffei Aktiengesellschaft, 80997 München (DE)
(72) Erfinder: WOHLRAB, Walter, D-91781 Weissenburg (DE)
(74) Vertreter: Rucker, Bernd, Dipl.-Ing.
(86) Internationale Anmeldenummer: EP9404090
(87) Internationale Veröffentlichungsnummer: WO9517292

(56) Entgegenhaltungen:
- EP-A- 0 381 107
- WO-A-92/11993
- WO-A-94/06614
- PATENT ABSTRACTS OF JAPAN vol. 013, no. 591 (M-913) 26. Dezember 1989 & JP,A,01 247 810 (MATSUMURA SEISAKUSHO) 3. Oktober 1989

## Beschreibung

Die Erfindung betrifft eine Formschließvorrichtung für Spritzgießmaschinen gemäß dem Oberbegriff der Ansprüche 1 und 6.

Eine Formschließvorrichtung dieser Art ist aus der DE 37 18 106 A 1 (Ausführungsform gemäß Fig. 5) bekannt, bei der die bewegliche Formaufspannplatte mittels in der festen Formaufspannplatte abgestützter Bewegungsspindeln im Schließ- und Öffnungshub bewegbar ist und bei der der Schließdruckaufbau mittels in der festen Formaufspannplatte abgestützter und an den Bewegungsspindeln angreifender hydraulischer Kolben-Zylindereinheiten erfolgt. Bei dieser Anordnung übernehmen die Spindeln neben dem schnell durchzuführenden Öffnungs- und Schließhub auch die volle Zugkraft bei Erzeugung der Schließkraft durch die hydraulischen Kolben-Zylindereinheiten. Die Bewegungsspindeln sind daher sowohl für die Bewältigung der Bewegungs- wie auch der Schließkraftfunktion auszulegen, wodurch die Bewegungsspindeln verhältnismäßig schwer auszuführen sind.

Aus der EP 0 381 107 A2 ist ferner eine Formschließvorrichtung bekannt, bei der in der festen Formaufspannplatte befestigte Bewegungsspindeln mit der beweglichen Formaufspannplatte mittels Spindelmuttern gekoppelt sind, die durch einen Drehantrieb die Öffnungs- und Schließbewegung bewirken. Da der Schließdruckaufbau über hydraulische Kolben-Zylindereinheiten erfolgt, die sich an den Spindelmuttern abstützen, müssen auch hier die Bewegungsspindeln zur Übernahme der aus dem hohen Schließdruck resultierenden Zugkräfte ausgelegt sein.

Der Erfindung liegt daher die Aufgabe zugrunde, eine Formschließvorrichtung der vorgenannten Art so weiterzuentwickeln, daß bei Sicherstellung des hohen Schließdrucks durch eine hydraulische Kolben-Zylinderheiten der Bewegungsantrieb durch Bewegungsspindeln im wesentlichen nur entsprechend den Erfordernissen für schnelle Öffnungs- und Schließbewegungen auszulegen ist. Diese Aufgabe wird durch die kennzeichnenden Merkmale der nebengeordneten Ansprüche 1 und 6 gelöst.

Vorteilhafte Ausgestaltungen und Maßnahmen der Erfindung sind in den Unteransprüchen angegeben.

Die Erfindung wird nachfolgend anhand von drei Ausführungsformen näher erläutert. Es zeigt:

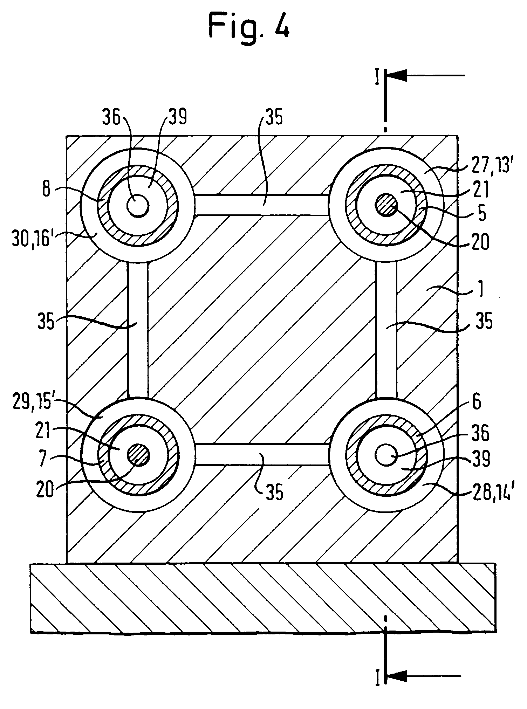

- Fig. 1: einen schematischen Längsschnitt durch eine Formschließvorrichtung einer Spritzgießmaschine gemäß der Schnittlinie I-I in Fig. 4,
- Fig. 2: einen schematischen Längsschnitt durch eine andere Ausführungsform einer Formschließvorrichtung,
- Fig. 3: einen schematischen Längsschnitt durch eine weitere Ausführungsform einer Formschließvorrichtung und
- Fig. 4: einen für die Formschließvorrichtungen nach den Figuren 1 bis 3 gemeinsam geltenden Querschnitt gemäß der Schnittlinie IV-IV in Fig. 1.

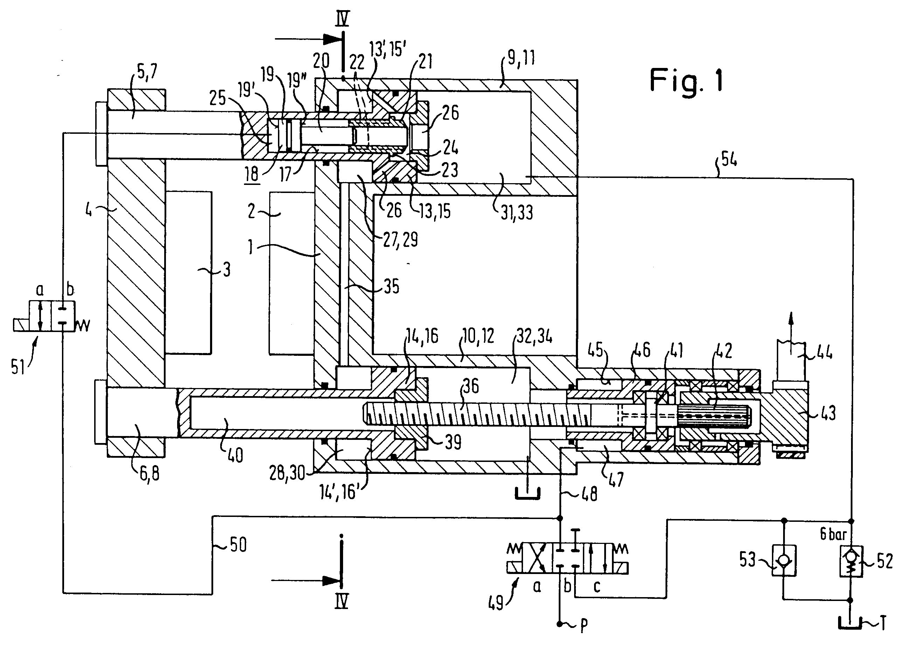

Die Fig. 1 zeigt eine Formsschließvorrichtung für eine Spritzgießmaschine mit einer festen Formaufspannplatte 1 mit einer ersten Werkzeughälfte 2 und mit einer beweglichen, die zweite Werkzeughälfte 3 tragenden beweglichen Formaufspannplatte 4 in der vier Kolben-Säuleneinheiten 5 bis 8 befestigt sind, die die feste Formaufspannplatte 1 durchsetzen und in dieser in vier Haupthydraulikzylindern 9 bis 12 mit Kolben 13 bis 16 verschieblich geführt sind.

Die vier Kolben-Säuleneinheiten 5 bis 8 bestehen aus zwei Arten, von denen die Kolben-Säuleneinheiten 5 und 7 mit jeweils einer Druckübersetzereinrichtung und die Kolben-Säuleneinheiten 6 und 8 mit jeweils einer Bewegungsspindelanordnung ausgestattet sind.

Die Druckübersetzereinrichtungen der Kolben-Säuleneinrichtungen 5 und 7 bestehen jeweils aus einem Druckübersetzerzylinder 17 in dem ein zweistufiger Druckübersetzerkolben 18 geführt ist, der einen größeren, dem Durchmesser des Druckübersetzerzylinders 17 entsprechenden Druckkolben 19 und einen kleineren Druckkolben 20 aufweist, der von einem aus einer Ventilhülse 21 bestehenden Ventilkörper umgeben ist. Die Ventilhülse 21 entspricht im Außendurchmesser im wesentlichen dem Durchmesser des Druckübersetzerzylinders 17 und ist in diesem sowie gegenüber dem kleineren Druckkolben 20 axial verschieblich. Die Ventilhülse 21 weist an ihrer Außenfläche mindestens eine axial durchgehende Nut 22 auf. Die Axialverschieblichkeit der Ventilhülse 21 ist in Schließrichtung begrenzt durch den Außenringanschlag 23 und in Öffnungsrichtung durch zwischen dem Endteil des kleineren Druckkolbens 20 und dem Endteil am Innenumfang der Ventilhülse 21 wirkenden Anschlageinrichtungen (nicht dargestellt).

Der Druckübersetzerkolben 18 unterteilt den Druckübersetzerzylinder 17 in einen schließseitigen Druckübersetzerraum 24 und in einen öffnungsseitigen Druckübersetzerraum 25.
Der öffnungsseitige Druckübersetzerraum 25 ist Bestandteil eines Durchgangs 26 im Kolben 13, 15, der den Haupthydraulikzylinder 9, 11 in einen schließseitigen Zylinderraum 27, 28 und in einen öffnungsseitigen Zylinderraum 31, 32 unterteilt. Der Durchgang 26 ist durch die Ventilhülse 21 verschließbar.

In gleicher Weise unterteilen die Kolben 14 und 16 der mit je einer Bewegungsspindelanordnung ausgestatteten Kolben-Säuleneinheiten 6 und 8 diese Hauptzylinderräume 10 und 12 in schließseitige Zylinderräume 29 und 30 und in öffnungsseitige Zylinderräume 33 und 34.

Sämtliche schließseitige Zylinderräume 27,28 und 29,30 sind untereinander durch Kanäle 35 verbunden.

Die Bewegungsspindelanordnungen der Kolben-Säuleneinrichtungen 6 und 8 bestehen jeweils aus einer Bewegungsspindel 36,37,38, die sich mit einer im Kolben 14, 16 befestigten Spindelmutter 39 im Gewindeeingriff befindet und die in eine Ausnehmung 40 in der Kolben-Säuleneinrichtung 6 und 8 eintaucht.

Die Bewegungsspindeln 36,37,38 weisen ferner ein Axiallager 41 sowie ein Endteil 42 auf, mit dem die Bewegungsspindel axialverschieblich mit einem Drehantrieb gekoppelt ist, von dem lediglich ein Antriebsritzel 43 dargestellt ist, das über einen Riementrieb 44 mit einem Servomotor mit Positionsregelung antreibbar ist. Der Servomotor besteht vorzugsweise aus einem Elektromotor.

Die vorbeschriebenen Merkmale und Einrichtungen sind für die drei Ausführungsformen gemäß den Figuren 1 bis 3 identisch. Im folgenden werden daher nur noch die Besonderheiten der jeweiligen Ausführungsformen beschrieben.

### 1. Ausführungsform nach Fig. 1

1.1 Konstruktiver Aufbau
   Die Bewegungsspindel 36 der Ausführungsform nach Fig.1 durchdringt den öffnungsseitigen Zylinderraum 32 und ragt in einen anschließenden zweiten Zylinderraum 45 in dem die Bewegungsspindel 36 mit dem Axiallager 41 in einer Kolbeneinheit 46 gelagert ist, die den zweiten Zylinderraum 45 in einen zweiten schließseitigen Zylinderraum 47 und in einen zweiten öffnungsseitigen Zylinderraum (in der dargestellten Schaltstellung der Kolbeneinheit 46 nicht vorhanden) unterteilt.
   Vom zweiten schließseitigen Zylinderraum 47 führt eine Hydraulikleitung 48 zu einem ersten Mehrwegeventil 49 (4/3-Wegeventil) mit Schaltstellungen a, b und c. Von der Hydraulikleitung 48 zweigt eine Hydraulikleitung 50 zu einem zweiten Mehrwegeventil 51 (4/2-Wegeventil) mit Schaltstellungen a und b ab, über das eine Verbindung zwischen dem zweiten schließseitigen Zylinderraum 47 und dem öffnungsseitigen Druckzylinderraum 25 hergestellt oder unterbrochen werden kann. Über das erste Mehrwegeventil 49 ist die Hydraulikleitung 48 wahlweise an eine Druckmittelquelle P oder über ein Rückschlagventil 52 mit Gegendruck (6 bar) zum Tank T schaltbar. Über ein zweites, als Nachsaugventil funktionierendes Rückschlagventil 53 kann Hydraulikflüssigkeit vom Tankt T entnommen werden. Der öffnungsseitige Zylinderraum 31 ist über eine Hydraulikleitung 54 und das Rückschlagventil 52 mit Gegendruck mit dem Tank T in Verbindung.
1.2 Funktionsbeschreibung
1.2.1 Schließen der Formschließvorrichtung im Eilgang
   Hierzu wird der zweite schließseitige Zylinderraum 47 über die Schaltstellung c des ersten Mehrwegeventils 49 mit Druckmedium aus der Druckmittelquelle P beaufschlagt, worauf die Kolbeneinheit 46 die in der Fig. 1 dargestellte rechte Anschlagposition einnimmt. Das zweite Mehrwegeventil 51 befindet sich in der Schaltstellung b, womit sichergestellt ist, daß der Druckübersetzerkolben 18 die Ventilhülse 21 in der in der Fig. 1 dargestellten Position hält, in der der Durchgang 26 zwischen dem schließseitigen Zylinderraum 27 und dem öffnungsseitigen Zylinderraum 31 offen ist.
   Durch Drehung der Bewegungsspindel 36 werden die beiden Werkzeughälften 2 und 3 gegeneinandergefahren, bis sie aneinander zum Anschlag kommen. Aufgrund des Antriebs der Bewegungsspindel 31 über einen elektrischen Servomotor mit Positionsregelung kann dabei eine präzise Positionierung erfolgen. Während der Gegeneinanderbewegung der Werkzeughälften 2 und 3 erfolgt eine Umschichtung des Hydrauliköls aus den öffnungsseitigen Zylinderräumen 31 und 33 über die Durchgänge 26 und die Kanäle 35 zu den schließseitigen Zylinderräumen 27 bis 30, wobei fehlende Mengen an Hydrauliköl über die Leitung 54 und das Nachsaugventil 53 ersetzt werden.
1.2.2 Schließdruckaufbau
   Hierzu werden das erste Mehrwegeventil 49 in die Schaltstellung b und das zweite Mehrwegeventil 51 in die Schaltstellung a gebracht. Bei weiterer Drehung der Bewegungsspindel 36 im Schließsinne wird die Kolbeneinheit 46 in der Darstellung nach Fig. 1 nach links verschoben, worauf das in dem zweiten schließseitigen Zylinderraum 47 enthaltene Hydrauliköl über die Hydraulikleitungen 48 und 50 und das zweite Mehrwegeventil 51 in den öffnungsseitigen Drucküberscherraum 25 gelangt und eine Verschiebung des Drucküberscherkolbens 18 und der Ventilhülse 21 bewirkt, so daß zunächst durch die Ventilhülse 21 der Durchgang 26 verschlossen wird. Durch die weitere Verschiebung des Druckübersetzerkolbens 18 wird aufgrund der Differenzdruckflächen 19' und 19'' eine Drucküberhöhung erzielt, die sich über die durchgehende Nut 22 in der Ventilhülse 21 fortpflanzt und an den Ringkolbenflächen 13' bis 16' den erforderlichen Schließdruck erzeugt.
1.2.3 Druckabbau
   Zur Entlastung des auf die Ringkolbenflächen 13' bis 16' wirkenden Schließdruckes wird das zweite Mehrwegeventil 51 in die Schaltstellung a und das erste Mehrwegeventil 49 in die Schaltstellung a gebracht, worauf der Druckübersetzerkolben 18 drucklos zum Tank T geschaltet wird. Der zweite schließseitige Zylinderraum 47 wird an die Druckmittelquelle P angeschlossen, sodaß die Kolbeneinheit in die in Fig. 1 dargestellte Anschlagposition zurückgestellt wird.
1.2.4 Öffnen der Formverschlußvorrichtung im Eilgang
   Hierzu werden das erste und das zweite Mehrwegeventil 49 und 51 in die gleiche Schaltstellung gebracht, wie bei der Durchführung des Schließvorganges, wobei jedoch die Drehrichtung der Bewegungsspindel 36 umgekehrt wird, so daß sich eine auseinanderlaufende Bewegung der Werkzeughälften 2 und 3 ergibt.

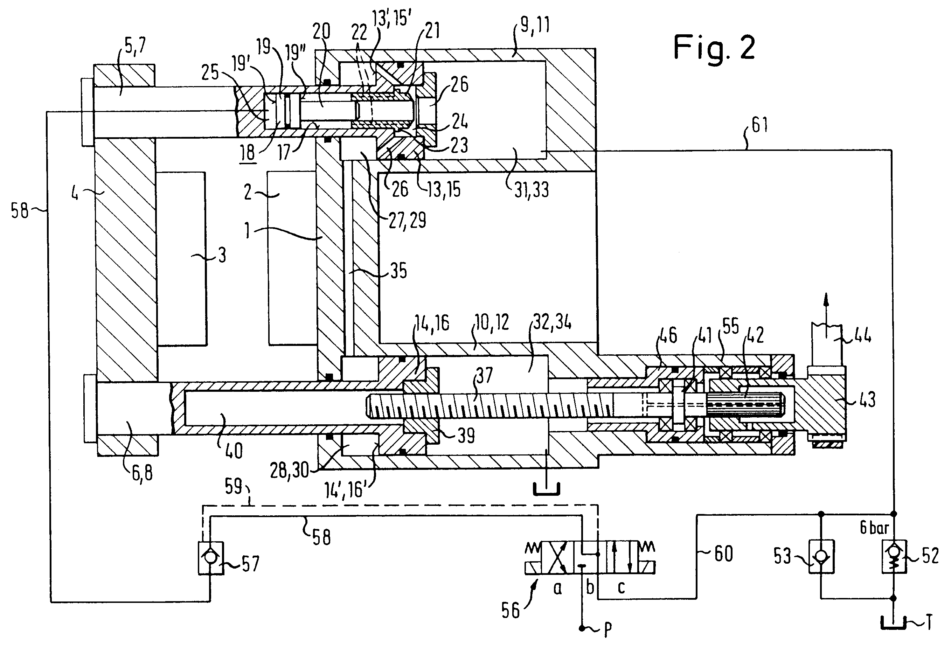

### 2. Ausführungsform nach Fig. 2

2.1 Konstruktiver Aufbau
   Bei der Ausführungsform nach Fig. 2 ist die Bewegungsspindel 37 mittels eines Axiallagers 41 in einen an den Haupthydraulikzylinder 10 anschließenden Gehäuse 55 frei drehbar, jedoch axial unverschieblich gelagert. Das Hydrauliksystem besteht aus einer Druckmittelquelle P, einem Mehrwegeventil 56 mit Schaltpositionen a, b und c, einem freischaltbaren Rückschlagventil 57, einem Nachsaugventil 53, einem Rückschlagventil 52 mit Gegendruck, einem Tank T sowie aus Hydraulikleitungen 58 bis 61.
2.2 Funktionsbeschreibung
2.2.1 Schließen der Formschließvorrichtung im Eilgang
   Hierzu wird das Mehrwegeventil 56 in die in Fig. 2 dargestellte Position b geschaltet, in der sichergestellt ist, daß der Durchgang 26 im Kolben 13, 15 offen bleibt, so daß beim Drehen der Bewegungsspindel 37 und der damit bewirkten Gegeneinanderbewegung der Werkzeughälften 2 und 3 das Hydrauliköl aus den beiden öffnungsseitigen Zylinderräumen 31 und 33 in die schließseitigen Zylinderräume 27 bis 30 überströmen kann, wobei fehlende Ölvolumina über das Nachsaugventil 53 und die Hydraulikleitung 61 nachgesaugt werden können. Die Drehung der Bewegungsspindel 37 wird gestoppt, wenn die beiden Werkzeughälften 2 und 3 aneinander zur Auflage gekommen sind.
2.2.2 Schließkraftaufbau
   Hierzu wird das Mehrwegeventil 56 in die Schaltstellung c gebracht, in der das Hydrauliköl von der Druckmittelquelle P über die Hydraulikleitung 58 in den schließseitigen Druckübersetzerraum 24 gelangt und mittels des Druckübersetzerkolbens 18 den zu 1.2.2 beschriebenen Schließdruckaufbau bewirkt.
2.2.3 Druckabbau
   Zur Entlastung des auf die Ringkolbenflächen 13' bis 16' wirkenden Schließdruckes wird das Mehrwegeventil 56 in die Schaltstellung a gebracht, in der über die Hydraulikleitung 59 das Rückschlagventil 57 freigeschaltet wird, worauf sich der auf dem Druckuntersetzerkolben 18 lastende Druck über die Hydraulikleitungen 58 und 60 zum Tank T entspannen kann.
2.2.4 Öffnen der Formschließvorrichtung im Eilgang
   Hierzu wird das Mehrwegeventil 56 in die Schaltstellung b gebracht. Durch Drehung der Bewegungsspindel 37 in dem Sinn, daß sich die Werkzeughälften 2,3 auseinanderbewegen, wird in den schließseitigen Zylinderräumen 27 ein Druck erzeugt, der über den Durchgang 26 ein Zurückstellen des Druckübersetzerkolbens 18 und der Ventilhülse 21 in die in Fig. 2 dargestellte Position bewirkt, sodaß der Durchgang 26 zwischen den schließseitigen Zylinderräumen 27, 29 vollkommen frei ist, sodaß bei der Auseinanderbewegung ein Volumenausgleich zwischen den schließseitigen Zylinderräumen 27 bis 30 und den öffnungsseitigen Zylinderräumen 31 bis 33 erfolgen kann. Überschüssiges Hydrauliköl wird über die Hydraulikleitung 61 zum Tank T abgeführt.

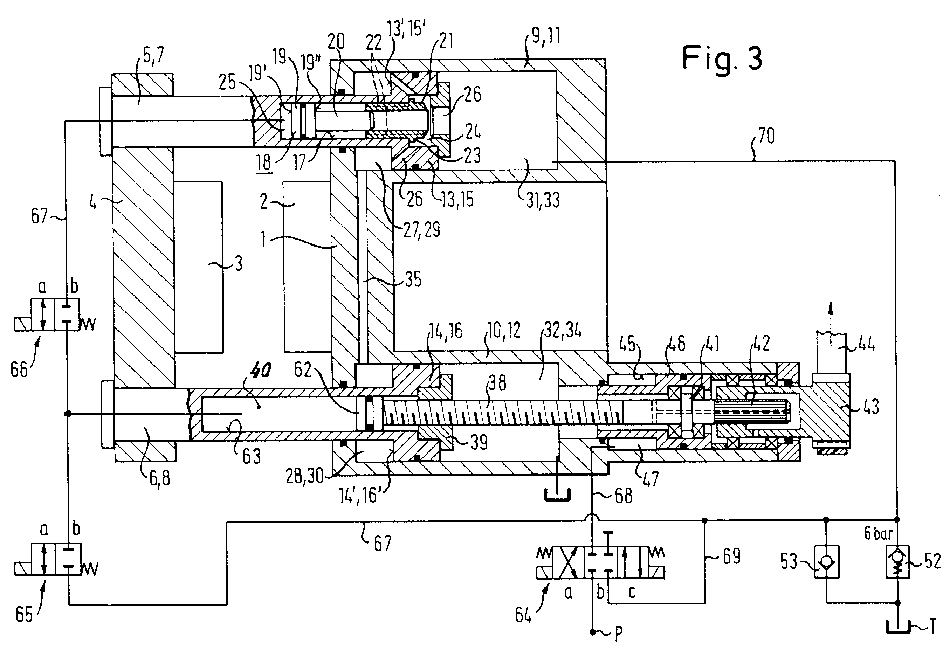

### 3. Ausführungsform nach Fig. 3

3.1 Konstruktiver Aufbau
   Die Bewegungsspindel 38 gemäß Fig. 3 entspricht im antriebsseitigen Teil der Bewegungsspindel 36 nach Fig. 1. An dem in die Kolben-Säuleneinheit 6 (8) eintauchenden Ende weist die Bewegungsspindel 38 einen hydraulischen Spindelkolben 62 auf, der in einem Spindelzylinder 63 geführt ist. Das Hydrauliksystem besteht aus einer Druckmittelquelle P, einem ersten Mehrwegventil 64 mit drei Schaltstellungen a bis c, einem zweiten Mehrwegeventil 65 mit Schaltstellungen a und b sowie einem dritten Mehrwegeventil 66 mit Schaltstellungena und b. Die vorbeschriebenen Mehrwegventile 64 bis 66 sind über Hydraulikleitungen 67 bis 70 an den öffnungsseitigen Druckübersetzerraum 24, den Spindelzylinder 63, den zweiten schließseitigen Zylinderraum 47, den öffnungsseitigen Zylinderraum 31, 33 und an den Tank T angeschlossen.
3.2 Funktionsbeschreibung
3.2.1 Schließen der Formschließvorrichtung im Eilgang
   Hierzu wird das erste Mehrwegeventil 64 in die Schaltstellung c geschaltet, wodurch der zweite schließseitige Zylinderraum 47 mit Druckmittel aus der Druckmittelquelle P beaufschlagt wird und die Kolbeneinheit 46 die in Fig. 3 dargestellte rechte Anschlagposition einnimmt. Das zweite Mehrwegeventil 65 wird in die Schaltposition a geschaltet, wodurch beim dem durch die Spindeldrehung bewirkten Zusammenfahren der Werkzeughälften 2 und 3 das aus dem Spindelzylinder 63 vom Spindelkolben 62 verdrängte Hydrauliköl über die Hydraulikleitung 67 zum Tank T überströmen kann. Das dritte Mehrwegeventil 66 wird in die Schaltstellung b geschaltet, damit sichergestellt ist, daß der Druckübersetzerkolben 18 und die Ventilhülse 21 in der in Fig. 3 dargestellten Position verbleiben, in der beim Verfahren der Kolben 13 bis 16 in Schließstellung ein Austausch der Ölvolumina zwischen den öffnungsseitigen Zylinderräumen 31 und 33 und den schließseitigen Zylinderräumen 27 bis 30 erfolgen kann.
3.2.2 Schließdruckaufbau
   Hierzu wird das erste Mehrwegeventil 64 in die Schaltstellung a geschaltet, wodurch das im zweiten schließseitigen Zylinderraum 47 enthaltene Hydrauliköl über die Hydraulikleitung 69 zum Tank T abströmen kann, wenn die Bewegungsspindel 38 bei in Schließposition befindlichen Kolben 13 bis 16 weitergedreht wird, damit der Spindelkolben 62 weiter in den Spindelzylinder 63 zwecks Erzeugung von Hydraulikdruck für die Beaufschlagung des Druckübersetzerkolbens 18 eindringen kann. Da sich die Kolben 13 bis 16 in Schließposition befinden, bei der die Werkzeughälften 2 und 3 aneinanderliegen, bewirkt die Drehung der Bewegungsspindel 38 ein Verschieben der Kolbeneinheit 46 nach links in dem Maße, wie der Spindelkolben 62 in den Spindelzylinder 63 eindringt. Das zweite Mehrwegeventil 65 wird sodann in die Schaltstellung b und das dritte Mehrwegeventil 66 wird in die Schaltstellung a geschaltet, sodaß sich der im Spindelzylinder 63 erzeugte Hydraulikdruck über die Leitungen 68 und 67 zum Druckübersetzerkolben 18 übertragen kann. Mittels des Druckübersetzerkolbens 18 erfolgt dann die zum Schließkraftaufbau geeignete Drucküberhöhung entsprechend der Funktionsbeschreibung zu 1.2.2.
3.2.3 Druckabbau
   Zur Entlastung des auf die Ringkolbenflächen 13' bis 16' wirkenden Schließdruckes wird das erste Mehrwegeventil 64 in die Schaltstellung a geschaltet, wodurch der zweite schließseitige Zylinderraum 47 in Nachsaugverbindung zum Tank T steht. Das zweite Mehrwegeventil 65 und das dritte Mehrwegeventil 66 werden beide in die Schaltstellung a geschaltet, wodurch sich der Druck aus dem öffnungsseitigen Druckübersetzerraum 25 und dem Spindelzylinder 63 zum Tank T entspannen kann.
3.2.4 Öffnen der Formschließvorrichtung im Eilgang
   Hierzu wird das erste Mehrwegeventil 64 in die Schaltstellung c geschaltet, in der der zweite schließseitige Zylinderraum 47 mit Druckmittel aus der Druckmittelquelle P beaufschlagt wird, wodurch die Kolbeneinheit 46 in die in Fig. 3 dargestellte Anschlagposition geschoben wird. Hierzu erfolgt gleichzeitig eine Drehung der Bewegungsspindel 38, um die Rückstellung der Kolbeneinheit 46 zu ermöglichen und um nach deren Anschlag die Öffnungsbewegung zu bewirken. Das zweite Mehrwegeventil 65 wird in die Schaltstellung a geschaltet, wodurch über die Hydraulikleitungen 68 und 67 Hydrauliköl aus dem Tank T in den Spindelzylinder 63 nachgesaugt werden kann. Das dritte Mehrwegeventil 66 wird in die Schaltstellung b geschaltet, in der sichergestellt ist, daß sich der Druckübersetzerkolben 18 und die Ventilhülse 21 in zurückgezogener, den Durchgang 26 freigebender Stellung befinden, sodaß während der Öffnungsbewegung ein ungehinderter Austausch der Ölvolumina zwischen den schließseitigen Zylinderräumen 27 bis 30 und den öffnungsseitigen Zylinderräumen 31 und 33 erfolgen kann, wobei überschüssige Ölvolumina über die Hydraulikleitung 61 zum Tank T abgeführt werden können.

## Patentansprüche

1. Formschließvorrichtung für eine Spritzgießmaschine mit einer, eine Werkzeughälfte tragenden festen Formaufspannplatte, einer die andere Werkzeughälfte tragenden beweglichen Formaufspannplatte, mit Bewegungsspindeln, die in der festen Formaufspannplatte frei drehbar und in einer Richtung axial abgestützt gelagert sind und die in der beweglichen Formaufspannplatte in einer darin befestigten Spindelmutter gelagert sind, mit einem Drehantrieb zur Betätigung der Bewegungsspindeln für den Schließ- und Öffnungshub der beweglichen Formaufspannplatte und mit den Bewegungsspindeln in Wirkverbindung stehenden hydraulischen Kolben-Zylindereinheiten für den Schließkraftaufbau, **dadurch gekennzeichnet,** daß die Bewegung und Kraftübertragung der beweglichen Formaufspannplatte beim Öffnen und Schließen im Eilgang allein durch die Bewegungsspindeln (36, 38) erfolgt und daß die hydraulische Kolben-Zylindereinheiten aus einem oder mehreren Kolben (13,14,15,16) und Hydraulikzylindern (9,10,11,12) besteht, deren Druckmittelbeaufschlagung für den Schließkraftaufbau durch von den Bewegungsspindeln (36,38) antreibbaren Kolben-Zylindereinheiten (45,46; 62,63) unter Zwischenschaltung einer oder mehrerer Druckübersetzereinrichtungen erfolgt.

2. Formschließvorrichtung nach Anspruch 1, **dadurch gekennzeichnet,** daß
- an der beweglichen Formaufspannplatte ( 4 ) zwei Arten von Kolben-Säuleneinheiten (5,6,7,8) befestigt sind, die die feste Formaufspannplatte ( 1 ) durchsetzen und in dieser mittels Kolben (13,14,15,16) in Hydraulikzylindern (9,10,11,12) geführt sind, wobei die Kolben-Säulen-Einheiten (6,8) der einen Art eine Bewegungsspindelvorrichtung und die Kolben-Säuleneinheit (5,7) der anderen Art eine Druckübersetzungseinrichtung aufweisen,
- die Kolben (13,14,15,16) die Hydraulikzylinder (9,10,11,12) jeweils in einen schließseitigen Zylinderraum (27,28,29,30) und in einen öffnungsseitigen Zylinderraum (31,32,33,34) unterteilen,
- sämtliche schließseitige Zylinderräume (27,28,29,30) über Kanäle (35) miteinander verbunden sind,
- die Druckübersetzereinrichtungen jeweils aus einem Druckübersetzerkolben (18) mit Differenzkolbenflächen (19' und 19'' ), einem Druckübersetzerzylinder (17) und einem Ventilkörper (21) bestehen, wobei der Druckübersetzerkolben (18) den Druckübersetzerzylinder (17) in einen schließseitigen Druckübersetzerraum (24) und in einen öffnungsseitigen Druckübersetzerraum (25) unterteilt und der Ventilkörper (21) zwischen einer einen Durchgang (26) vom schließseitigen Zylinderraum (27,28,29,30) zum öffnungsseitigen Zylinderraum (31,33) freigebenden und verschließenden Position schaltbar ist,
- die Bewegungsspindelanordnungen jeweils aus einer im Kolben (14,16) befestigten Spindelmutter (39) und einer darin im Gewindeeingriff befindlichen Bewegungsspindel (36) bestehen, die mit einem Ende in eine zylindrische Ausnehmung (40) in der Kolben-Säuleneinrichtung (6,8) eintaucht und mit dem anderen Ende den Haupt-Hydraulikzylinder (10,12) durchsetzt und zum einen mit einer Kolbeneinheit (46) in einem zweiten Hydraulikzylinder (45) geführt ist und zum anderen den zweiten Hydraulikzylinder (45) durchsetzt und mit dem Endteil (42) mit einem Drehantrieb gekoppelt ist,
- die Kolbeneinheit (46) jeder Bewegungsspindel (36) den zweiten Hydraulikzylinder (45) in einen zweiten schließseitigen Zylinderraum (47) und in einen zweiten öffnungsseitigen Zylinderraum unterteilt,
- in einer ersten Funktionsstellung (Schließbewegung im Eilgang) eines Hydrauliksystems ein erstes Mehrwegventil (49) in eine Schaltstellung c schaltbar in der der zweite schließseitige Zylinderraum (47) mit einer Druckmittelquelle P verbindbar ist, und ein zweites Mehrwegventil (51) in eine Schaltstellung b schaltbar ist, in der eine vom zweiten schließseitigen Zylinderraum (47) zum öffnungsseitigen Druckzylinderraum (25) führende Hydraulikleitung (50) unterbrochen ist, wobei sich der Druckübersetzerkolben (18) und die Ventilhülse (21) in einer einen Durchgang (26) freigebenden Grundstellung befinden,
- in einer zweiten Funktionsstellung (Schließdruckaufbau) des Hydrauliksystems der zweite schließseitige Zylinderraum (47) mit dem öffnungsseitigen Druckübersetzerraum (25) verbindbar ist, wobei sich das erste Mehrwegventil (49) in der Schaltzstellung b und das zweite Mehrwegventil (51) in der Schaltstellung a befinden,
- in einer dritten Funktionsstellung (Druckabbau) des Hydrauliksystems der zweite schließseitige Zylinderraum (47) und der öffnungsseitige Druckübersetzerraum (25) drucklos schaltbar sind, wobei sich das erste Mehrwegventil (49) und das zweite Mehrwegventil (51) jeweils in der Schaltstellung a) befinden und
- in einer vierten, der ersten Funktionsstellung entsprechenden Funktionsstellung (Öffnungsbewegung im Eilgang) des Hydrauliksystems das erste Mehrwegventil (49) in die Schaltstellung c und das zweite Mehrwegventil (51) in die Schaltstellung b schaltbar ist.

3. Formschließvorrichtung nach Anspruch 1 **dadurch gekennzeichnet,** daß an der beweglichen Formaufspannplatte ( 4 ) zwei Arten von Kolben-Säuleneinheiten (5,6,7,8) befestigt sind, die die feste Formaufspannplatte ( 1 ) durchsetzen und in dieser mittels Kolben (13,14,15,16) in Hydraulikzylindern (9,10,11,12) geführt sind, wobei die Kolben-Säulen-Einheiten (6,8) der einen Art eine Bewegungsspindelvorrichtung und die Kolben-Säuleneinheit (5,7) der anderen Art eine Druckübersetzungseinrichtung aufweisen,
- die Kolben (13,14,15,16) die Hydraulikzylinder (9,10,11,12) jeweils in einen schließseitigen Zylinderraum (27,28,29,30) und in einen öffnungsseitigen Zylinderraum (31,32,33,34) unterteilen,
- sämtliche schließseitige Zylinderräume (27,28,29,30) über Kanäle (35) miteinander verbunden sind,
- die Druckübersetzereinrichtungen jeweils aus einem Druckübersetzerkolben (18) mit Differenzkolbenflächen (19' und 19'' ), einem Druckübersetzerzylinder (17) und einem Ventilkörper (21) bestehen, wobei der Druckübersetzerkolben (18) den Druckübersetzerzylinder (17) in einen schließseltigen Druckübersetzerraum (24) und in einen öffnungsseitigen Druckübersetzerraum (25) unterteilt und der Ventilkörper (21) zwischen einer einen Durchgang (26) vom schließseitigen Zylinderraum (27,28,29,30) zum öffnungsseitigen Zylinderraum (31,33) frei gebenden und verschließenden Position schaltbar ist,
- die Bewegungsspindelanordnungen jeweils aus einer im Kolben (14,16) befestigten Spindelmutter (39) und einer darin im Gewindeeingriff befindlichen Bewegungsspindel (36) bestehen, die mit einem Ende in eine zylindrische Ausnehmung (40) in der Kolben-Säuleneinrichtung (6,8) eintaucht und mit dem anderen Ende den Haupt-Hydraulikzylinder (10,12) durchsetzt und zum einen mit einer Kolbeneinheit (46) in einem zweiten Hydraulikzylinder (45) geführt ist und zum anderen den zweiten Hydraulikzylinder (45) durchsetzt und mit dem Endteil (42) mit einem Drehantrieb gekoppelt ist,
- die Kolbeneinheit (46) jeder Bewegungsspindel (36) den zweiten Hydraulikzylinder (45) in einen zweiten schließseitigen Zylinderraum (47) und in einen zweiten öffnungsseitigen Zylinderraum unterteilt,
- in einer ersten Funktionsstellung (Schließbewegung im Eilgang) eines Hydrauliksystems ein erstes Mehrwegventil (49) in eine Schaltstellung c schaltbar ist, in der der zweite schließseitige Zylinderraum (47) mit einer Druckmittelquelle P verbindbar ist, und ein zweites Mehrwegventil (51) in eine Schaltstellung b schaltbar ist, in der eine vom zweiten schließseitigen Zylinderraum (47) zum öffnungsseitigen Druckzylinderraum (25) führende Hydraulikleitung (50) unterbrochen ist, wobei sich der Druckübersetzerkolben (18) und die Ventilhülse (21) in einer einen Durchgang (26) freigebenden Grundstellung befinden,
- in einer zweiten Funktionsstellung (Schließdruckaufbau) des Hydrauliksystems der zweite schließseitige Zylinderraum (47) mit dem öffnungsseitigen Druckübersetzerraum (25) verbindbar ist, wobei sich das erste Mehrwegventil (49) in der Schaltstellung b und das zweite Mehrwegventil (51) in der Schaltstellung a befinden,
- in einer dritten Funktionsstellung (Druckabbau) des Hydrauliksystems der zweite schließseitige Zylinderraum (47) und der öffnungsseitige Druckübersetzerraum (25) drucklos schaltbar ist, wobei sich das erste Mehrwegventil (49) und das zweite Mehrwegventil (51) jeweils in der Schaltstellung a) befinden und
- die Bewegungsspindelanordnungen jeweils aus einer im Kolben (14,16) befestigten Spindelmutter (39) und einer darin im Gewindeeingriff befindlichen Bewegungsspindel (38) bestehen, die mit einem Ende mit einem Spindelkolben (62) in einem in der Kolben-Säuleneinheit (6,8) ausgebildeten Spindelzylinder (63) geführt ist, und mit dem anderen Ende den Haupthydraulikzylinder (10,12) durchsetzt und zum einen mit einer Kolbeneinheit (46) in einem zweiten Hydraulikzylinder (45) geführt ist und zum anderen den zweiten Hydraulikzylinder (45) durchsetzt und mit dem Endteil (42) mit einem Drehantrieb gekoppelt ist,
- die Kolbeneinheit (46) jeder Bewegungsspindel (38) den zweiten Hydraulikzylinder (45) in einen zweiten schließseitigen Zylinderraum (47) und in einen zweiten öffnungsseitigen Zylinderraum unterteilt,
- in einer ersten Funktionsstellung (Schließbewegung im Eilgang) eines Hydrauliksystems ein erstes Mehrwegeventil (64) in eine Schaltstellung c schaltbar ist, in der der zweite schließseitige Zylinderraum (47) mit Druckmedium aus der Druckmittelquelle P beaufschlagbar ist, ein zweites Mehrwegeventil (65) in die Schaltstellung a schaltbar ist, in der der Spindelzylinder (63) mit dem Tank T verbindbar ist, und ein drittes Mehrwegventil (66) in eine Schaltstellung b schaltbar ist, mit der die Hydraulikleitung (67) zum Druckübersetzersystem unterbrochen ist,
- in einer zweiten Funktionsstellung (Schließdruckaufbau) des Hydrauliksystems das erste Mehrwegventil (64) in die Schaltstellung a schaltbar ist, in der das im zweiten schließseitigen Zylinderraum (47) enthaltene Druckmedium zum Tank T entspannen kann, das zweite Mehrwegventil (65) in die Schaltstellung b und das dritte Mehrwegventil (66) in die Schaltstellung a schaltbar sind, in denen das Mehrwegeventil (65) die Leitung zum Tank T absperrt und das Mehrwegeventil (66) den Spindelzylinder (63) mit dem öffnungsseitigen Druckübersetzerraum (25) verbindet,
- in einer dritten Funktionsstellung (Druckabbau) des Hydrauliksystems das erste Mehrwegventil (64) in die Schaltstellung a schaltbar ist, in der das im zweiten schließseitigen Zylinderraum (47) enthaltene Druckmedium zum Tank T entspannen kann, das zweite Mehrwegeventil (65) und das dritte Mehrwegventil (66) jeweils in die Schaltstellung a schaltbar sind, wodurch sich der Druck aus dem öffnungsseitigen Druckübersetzerraum (25) und dem Spindelzylinder (63) zum Tank T entspannen kann, und
- in einer vierten, der ersten Funktionsstellung entsprechenden, zum Öffnen im Eilgang vorgesehenen Funktionsstellung das erste Mehrwegventil (64) in die Schaltstellung c schaltbar ist, in der der zweite schließseitige Zylinderraum (47) mit der Druckmittelquelle P verbindbar ist, das zweite Mehrwegventil (65) in die Schaltstellung a schaltbar ist, in der Hydrauliköl aus dem Tank T in den Spindelzylinder (63) nachsaugbar ist, und das dritte Mehrwegventil (66) in eine Schaltstellung b schaltbar ist, in der die Hydraulikleitung (67) zum öffnungsseitigen Druckübersetzerraum (25) unterbrochen ist.

4. Formschließvorrichtung nach einem der Ansprüche 1 bis 3, **dadurch gekennzeichnet**, daß in der festen Formaufspannplatte ( 1 ) vier Kolben (13,14,15,16) von Kolben-Säuleneinheiten (5,6,7,8) angeordnet sind, in denen jeweils diagonal gegenüberliegend zwei Bewegungsspindelanordnungen und zwei Druckübersetzereinrichtungen angeordnet sind.

5. Formschließvorrichtung nach einem der Ansprüche 1 bis 4, **dadurch gekennzeichnet**, daß der Druckübersetzerkolben (18) aus einem Kolbenteil (19) mit größerem und einem Kolbenteil (20) mit kleinerem Durchmesser besteht, wobei auf letzterem der aus einer Ventilhülse (21) bestehende Ventilkörper axial verschieblich gelagert ist, der mit dem Druckübersetzerkolben (18) nach der Maßgabe gekoppelt ist, daß beim verschieben des Druckübersetzerkolbens (18) in eine zum Kolben (13,15) entgegengesetzte Richtung eine Mitnahme der Ventilhülse (21) erfolgt und der am Umfang eine axiale Nut (22) aufweist, über die Druckmedium vom Durchgang (26) zu der Ringkolbenfläche (19'') des Druckübersetzerkolbens (18) leitbar ist.

6. Formschließvorrichtung für eine Spritzgießmaschine mit einer, eine Werkzeughälfte tragenden festen Formaufspannplatte, einer die andere Werkzeughälfte tragenden beweglichen Formaufspannplatte, mit Bewegungsspindeln, die in der festen Formaufspannplatte frei drehbar und in einer Richtung axial abgestützt gelagert sind und die in der beweglichen Formaufspannplatte in einer darin befestigten Spindelmutter gelagert sind, mit einem Drehantrieb zur Betätigung der Bewegungsspindeln für den Schließ- und Öffnungshub der beweglichen Formaufspannplatte und mit den Bewegungsspindeln in Wirkverbindung stehenden hydraulischen Kolben-Zylindereinheiten für den Schließkraftaufbau, **dadurch gekennzeichnet,** daß
- an der beweglichen Formaufspannplatte ( 4 ) zwei Arten von Kolben-Säuleneinheiten (5,6,7,8) befestigt sind, die die feste Formaufspannplatte ( 1 ) durchsetzen und in dieser mittels Kolben (13,14,15,16) in Hydraulikzylindern (9,10,11,12) geführt sind, wobei die Kolben-Säulen-Einheiten (6,8) der einen Art eine Bewegungsspindelvorrichtung und die Kolben-Säuleneinheit (5,7) der anderen Art eine Druckübersetzungseinrichtung aufweisen,
- die Kolben (13,14,15,16) die Hydraulikzylinder (9,10,11,12) jeweils in einen schließseitigen Zylinderraum (27,28,29,30) und in einen öffnungsseitigen Zylinderraum (31,32,33,34) unterteilen,
- sämtliche schließseitige Zylinderräume (27,28,29,30) über Kanäle (35) miteinander verbunden sind,
- die Druckübersetzereinrichtungen jeweils aus einem Druckübersetzerkolben (18) mit Differenzkolbenflächen (19' und 19''), einem Druckübersetzerzylinder (17) und einem Ventilkörper (21) bestehen, wobei der Druckübersetzerkolben (18) den Druckübersetzerzylinder (17) in einen schließseitigen Druckübersetzerraum (24) und in einen öffnungsseitigen Druckübersetzerraum (25) unterteilt und der Ventilkörper (21) zwischen einer einen Durchgang (26) vom schließseitigen Zylinderraum (27,28,29,30) zum öffnungsseitigen Zylinderraum (31,33) frei gebenden und verschließenden Position schaltbar ist,
- die Bewegungsspindelanordnungen jeweils aus einer im Kolben (14,16) befestigten Spindelmutter (39) und einer darin im Gewindeeingriff befindlichen Bewegungsspindel (37) bestehen, die mit einem Ende in eine zylindrische Ausnehmung (40) in der Kolben-Säuleneinrichtung (6,8) eintaucht und mit dem anderen Ende den Hydraulikzylinder (10,12) durchsetzt und zum einen mittels eines Axiallagers (41) abgestützt ist und zum anderen mit dem Endteil (42) mit einem Drehantrieb gekoppelt ist,
- in einer ersten, zur Durchführung der Schließbewegung im Eilgang vorgesehenen Funktionsstellung eines Hydrauliksystems ein Mehrwegventil (56) in eine Schaltstellung b schaltbar ist, in der der öffnungsseitige Druckübersetzerraum (25) im wesentlichen drucklos mit dem Tank T verbunden ist,
- in einer zweiten, für den Schließkraftaufbau vorgesehenen Funktionsstellung des Hydrauliksystems, in der die Werkzeughälften 2 und 3 aneinanderliegen, das Mehrwegventil (56) in eine Schaltstellung c schaltbar ist, in der über die Hydraulikleitung (58) der öffnungsseitige Druckübersetzerraum (25) der Druckübersetzereinrichtung mit der Druckmittelquelle P verbunden ist,
- in einer dritten, für den Druckabbau vorgesehenen Funktionsstellung des Hydrauliksystems das Mehrwegventil (56) in eine Schaltstellung a schaltbar ist, in der das Druckmedium aus dem öffnungsseitigen Druckübersetzerraum (25) über Hydraulikleitungen (58 und 60) zum Tank T entspannen kann, und
- in einer vierten, für die Öffnungsbewegung im Eilgang vorgesehenen Funktionsstellung des Hydrauliksystems das Mehrwegventil (56) in eine Schaltstellung b schaltbar ist, in der die Druckübersetzereinrichtung in einer den Durchgang (26) freihaltenden Stellung gehalten wird.

7. Formschließvorrichtung nach Anspruch 6, **dadurch gekennzeichnet,** daß in der festen Formaufspannplatte ( 1 ) vier Kolben (13,14,15,16) von Kolben-Säuleneinheiten (5,6,7,8) angeordnet sind, in denen jeweils diagonal gegenüberliegend zwei Bewegungsspindelanordnungen und zwei Druckübersetzereinrichtungen angeordnet sind.

8. Formschließvorrichtung nach einem der Ansprüche 6 oder 7, **dadurch gekennzeichnet,** daß der Druckübersetzerkolben (18) aus einem Kolbenteil (19) mit größerem und einem Kolbenteil (20) mit kleinerem Durchmesser besteht, wobei auf letzterem der aus einer Ventilhülse (21) bestehende Ventilkörper axial verschieblich gelagert ist, der mit dem Druckübersetzerkolben (18) nach der Maßgabe gekoppelt ist, daß beim verschieben des Druckübersetzerkolbens (18) in eine zum Kolben (13,15) entgegengesetzte Richtung eine Mitnahme der Ventilhülse (21) erfolgt und der am Umfang eine axiale Nut (22) aufweist, über die Druckmedium vom Durchgang (26) zu der Ringkolbenfläche (19'') des Druckübersetzerkolbens (18) leitbar ist.

## Claims

1. A mould closing device for an injection moulding machine and comprising a fixed mould clamping plate supporting one tool half, a movable mould clamping plate carrying the other tool half, with screw drives which are axially supported in one direction and are freely rotatable in the fixed mould clamping plate and are mounted in the movable mould clamping plate in a spindle nut fixed therein, with a rotary drive for actuating the screw drives for the closing and opening travels of the movable mould clamping plate and with, operatively connected to the screw drives, a hydraulic piston-cylinder unit for building up the closing force, characterised in that the movement of and transmission of force for the movable mould clamping plate during opening and closing is provided during rapid movement solely by the screw drives (36, 38) and in that the hydraulic piston-cylinder unit consists of one or a pluralise of pistons (13, 14, 15, 16) and hydraulic cylinders (9, 10, 11, 12), to which, for the build-up of closing force, pressurised medium is applied by piston-cylinder units (45, 46; 62, 63) adapted to be driven by the screw drives (36, 38) through one or a plurality of interposed pressure transmitting means.

2. A mould closing device according to claim 1, characterised in that
- there are fixed on the movable moulding clamping plate (4) two types of piston-column units (5, 6, 7, 8) which pass through the fixed mould clamping plate (1) in which they are guided by means of pistons (13, 14, 15, 16) in hydraulic cylinders (9, 10, 11, 12), the piston-column units (6, 8) of one type comprising one screw drive device while the piston-column unit (5, 7) of the other type comprises a pressure transmitting means,
- the pistons (13, 14, 15, 16) sub-divide the hydraulic cylinders (9, 10, 11, 12) in each case into a closure-side cylinder space (27, 28, 29, 30) and an opening-side cylinder space (331, 32, 33, 34),
- all closure-side cylinder spaces (27, 28, 29, 30) are connected to one another via ducts (35),
- the pressure transmitting means consist in each case of a pressure transmitting piston (18) having differential piston surfaces (19' and 19''), a pressure transmitting cylinder (17) and a valve body (21), the valve transmitting piston (18) sub-dividing the pressure transmitting cylinder (17) into a closure-side pressure transmitting space (24) and an opening-side pressure transmitting space (25), the valve body (21) being adapted to be switched between positions which open and close a port (26) from the closure-side cylinder space (27, 28, 29, 30) to the opening-side cylinder space (31, 33),
- the drive screw arrangements in each case consist of a spindle nut (39) fixed in the piston (14, 16) and a screw drive (36) in screw threaded engagement therein and which has one end immersed in a cylindrical recess (40) in the piston column means (6, 8) while the other end passes through the main hydraulic cylinder (10, 12) and is guided on the one hand by a piston unit (46) in a second hydraulic cylinder (45) and on the other passes through the second hydraulic cylinder (45) and has a rotary drive coupled to the end part (42),
- the piston unit (46) of each screw drive (36) sub-divides the second hydraulic cylinder (45) into a second closure-side cylinder space (47) and a second opening-side cylinder space,
- in a first function position (closing movement, rapid speed) of a hydraulic system a first multi-way valve (49) can be switched into a position c in which the second closure-side cylinder space (47) can be connected to a source P of pressurised medium, and a second multi-way valve (51) can be switched into a position b in which a hydraulic line (50) leading from the second closure-side cylinder space (47) to the opening-side pressure cylinder space (25) is interrupted, the pressure transmitting piston (18) and the valve casing (21) being in a basic position which opens the port (26),
- in a second function position (closure pressure build-up) of the hydraulic system the second closure-side cylinder space (47) can be connected to the opening side pressure transmitting space (25), the first multi-way valve (49) being in the position b and the second multi-way valve (51) being in position a,
- in a third function position (pressure dissipation) of the hydraulic system the second closure-side cylinder space (47) and the opening side pressure transmitting space (25) can be switched to be pressureless, the first multi-way valve (49) and the second multi-way valve (51) being in each case in the switched position a, and
- in a fourth function position corresponding to the first function position (opening movement, rapid speed) of the hydraulic system the first multi-way valve (49) can be switched into position c and the second multi-way valve (51) into position b.

3. A mould closing device according to claim 1, characterised in that there are fixed on the movable mould clamping plate (4) two types of piston-column units (5, 6, 7, 8) which pass through the fixed mould clamping plate (1) in which they are guided by means of pistons (13, 14, 15, 16) in hydraulic cylinders (9, 10, 11, 12), the piston-column units (6, 8) of one type comprising one screw drive device while the piston-column unit (5, 7) of the other type comprises a pressure transmitting means,
- the pistons (13, 14, 15, 16) sub-divide the hydraulic cylinders (9, 10, 11, 12) in each case into a closure-side cylinder space (27, 28, 29, 30) and an opening-side cylinder space (331, 32, 33, 34),
- all closure side cylinder spaces (27, 28, 29, 30) are connected to one another via ducts (35),
- the pressure transmitting means consist in each case of a pressure transmitting piston (18) having differential piston surfaces (19' and 19''), a pressure transmitting cylinder (17) and a valve body (21), the valve transmitting piston (18) sub-dividing the pressure transmitting cylinder (17) into a closure-side pressure transmitting space (24) and an opening-side pressure transmitting space (25), the valve body (21) being adapted to be switched between positions which open and close a port (26) from the closure-side cylinder space (27, 28, 29, 30) to the opening-side cylinder space (31, 33),
- the drive screw arrangements in each case consist of a spindle nut (39) fixed in the piston (14, 16) and a screw drive (36) in screw threaded engagement therein and which has one end immersed in a cylindrical recess (40) in the piston column means (6, 8) while the other end passes through the main hydraulic cylinder (10, 12) and is guided on the one hand by a piston unit (46) in a second hydraulic cylinder (45) and on the other passes through the second hydraulic cylinder (45) and has a rotary drive coupled to the end part (42),
- the piston unit (46) of each screw drive (36) sub-divides the second hydraulic cylinder (45) into a second closure-side cylinder space (47) and a second opening-side cylinder space,
- in a first function position (closing movement, rapid speed) of a hydraulic system a first multi-way valve (49) can be switched into a position c in which the second closure-side cylinder space (47) can be connected to a source P of pressurised medium, and a second multi-way valve (51) can be switched into a position b in which a hydraulic line (50) leading from the second closure-side cylinder space (47) to the opening-side pressure cylinder space (25) is interrupted, the pressure transmitting piston (18) and the valve casing (21) being in a basic position which opens the port (26),
- in a second function position (closure pressure build-up) of the hydraulic system the second closure-side cylinder space (47) can be connected to the opening side pressure transmitting space (25), the first multi-way valve (49) being in the position b and the second multi-way valve (51) being in position a,
- in a third function position (pressure dissipation) of the hydraulic system the second closure-side cylinder space (47) and the opening side pressure transmitting space (25) can be switched to be pressureless, the first multi-way valve (49) and the second multi-way valve (51) being in each case in the switched position a, and
- the drive screw arrangements in each case consist of a spindle nut (39) fixed in the piston (14, 16) and a drive screw (38) disposed in screw threaded engagement therein, having one end guided by a spindle piston (62) in a spindle cylinder (63) constructed in the piston-column unit (6, 8), the other end traversing the main hydraulic cylinder (10, 12) and being guided on the one hand through a piston unit (46) in a second hydraulic cylinder (45) and on the other traversing the second hydraulic cylinder (45) and being coupled by its end part (42) to a rotary drive,
- the piston unit (46) of each drive screw (38) sub-divides the second hydraulic cylinder (45) into a second closure-side cylinder space (47) and a second opening-side cylinder space,
- in a first function position (closure movement, rapid movement) of the hydraulic system the first multi-way valve (64) can be switched to a position c in which the second closure-side cylinder space (47) can be subjected to pressurised medium from the source P, a second multi-way valve (65) can be switched into position a in which the spindle cylinder (63) can be connected to the tank T and a third multi-way valve (66) can be switched into position b with which the hydraulic line (67) to the pressure transmitting system is interrupted,
- in a second function position (closure pressure build-up) of the hydraulic system the first multi-way valve (64) can be switched to position a in which the pressurised medium contained in the second closure-side cylinder space (47) can be expanded to the tank T, the second multi-way valve (65) can be switched to position b and the third multi-way valve (66) can be switched to position a in which the multi-way valve (65) blocks the line to the tank T and the multi-way valve (66) connects the spindle cylinder (63) to the opening-side pressure transmitting space (25),
- in a third function position (pressure dissipation) of the hydraulic system the first multi-way valve (64) can be switched to position a in which the pressurised medium contained in the second closure-side cylinder space (47) can be expanded and passed to the tank T, the second multi-way valve (65) and the third multi-way valve (66) can be switched in each case to the position a so that the pressure from the opening-side pressure transmitting space (25) and the spindle cylinder (63) can be expanded and passed to the tank T, and
- in a fourth function position provided for opening in rapid movement and corresponding to the first function position, the first multi-way valve (64) can be switched to position c in which the second closure-side cylinder space (47) can be connected to the pressurised medium source P, the second multi-way valve (65) can be switched to the position a in which hydraulic fluid can be drawn from the tank T and pass into the spindle cylinder (63) and the third multi-way valve (66) can be switched to position b in which the hydraulic line (67) to the opening-side pressure transmitting space (25) is interrupted.

4. A mould closing device according to one of claims 1 to 3, characterised in that there are in the fixed mould clamping plate (1) four pistons (13, 14, 15, 16) of piston-column units (5, 6, 7, 8), in which there are respectively diagonally oppositely disposed two screw spindle arrangements and two pressure transmitting means.

5. A mould closing device according to one of claims 1 to 4, characterised in that the pressure transmitting piston (18) consists of a piston part (19) of greater diameter and a piston part (20) of lesser diameter, a valve member consisting of a valve sleeve (21) being mounted for axial displacement on the piston part (20) and being coupled to the pressure transmitting piston (18) on the principle that upon displacement of the pressure transmitting piston (18) in a direction opposite the piston (13, 15) there is an entrainment of the valve sleeve (21) and has on the periphery an axial groove (22) through which pressurised medium can be passed from the passage (26) to the annular piston surface (19'') of the pressure transmitting piston (18).

6. A mould closure device for an injection moulding machine having a fixed mould clamping plate carrying out tool half, a movable mould clamping plate carrying the other tool half, with drive screws which are mounted to be axially supported in one direction and to be freely rotatable in the fixed mould clamping plate and which are mounted in the movable mould clamping plate in a spindle nut fixed therein, with a rotary drive to actuate the drive screws for the closing and opening travels of the movable mould clamping plate and with a hydraulic piston-cylinder unit which is operatively connected to the drive screws for building-up the closure pressure, characterised in that
- there are fixed on the movable moulding clamping plate (4) two types of piston-column units (5, 6, 7, 8) which pass through the fixed mould clamping plate (1) in which they are guided by means of pistons (13, 14, 15, 16) in hydraulic cylinders (9, 10, 11, 12), the piston-column units (6, 8) of one type comprising one screw drive device while the piston-column unit (5, 7) of the other type comprises a pressure transmitting means,
- the pistons (13, 14, 15, 16) sub-divide the hydraulic cylinders (9, 10, 11, 12) in each case into a closure-side cylinder space (27, 28, 29, 30) and an opening-side cylinder space (31, 32, 33, 34),
- all closure side cylinder spaces (27, 28, 29, 30) are connected to one another via ducts (35),
- the pressure transmitting means consist in each case of a pressure transmitting piston (18) having differential piston surfaces (19' and 19''), a pressure transmitting cylinder (17) and a valve body (21), the valve transmitting piston (18) sub-dividing the pressure transmitting cylinder (17) into a closure-side pressure transmitting space (24) and an opening-side pressure transmitting space (25), the valve body (21) being adapted to be switched between positions which open and close a port (26) from the closure-side cylinder space (27, 28, 29, 30) to the opening-side cylinder space (31, 33),
- the drive screw arrangements in each case consist of a spindle nut (39) fixed in the piston (14, 16) and a screw drive (36) in screw threaded engagement therein and which has one end immersed in a cylindrical recess (40) in the piston-column means (6, 8) while the other end passes through the main hydraulic cylinder (10, 12) and is guided on the one hand by means of an axial bearing (41) and on the other is coupled to a rotary drive via the end part (42),
- in a first function position (closure movement in rapid speed) of a hydraulic system a multi-way valve (56) can be switched to a position b in which the opening-side pressure transmitting space (25) is connected to the tank T in a substantially pressureless state,
- in a second function position of the hydraulic system and provided for the build-up of closure force and in which the tool halves (2 and 3) rest on each other, the multi-way valve (56) can be switched to a position in which via the hydraulic line (58) the opening-side pressure transmitting space (25) of the pressure transmitting means is connected to the source P of pressurised medium,
- in a third function position of the hydraulic system and which is provided for pressure dissipation, the hydraulic system the multi-way valve (56) can be switched to a position a in which the pressurised medium can expand out of the opening-side pressure transmitting space (25) via hydraulic lines (58 and 60) to the tank T, and
- in a fourth function position of the hydraulic system and provided for the opening movement at rapid speed, the multi-way valve (56) can be switched to a position b in which the pressure transmitting means is maintained in a position which keeps the port (26) open.

7. A mould closing device according to claim 5, characterised in that there are in the fixed mould clamping plate (1) four pistons (13, 14, 15, 16) of piston-column units (5, 6, 7, 8) in which there are in each case diagonally oppositely disposed two drive screw arrangements and two pressure transmitting means.

8. A mould closing device according to one of claims 6 or 7, characterised in that the pressure transmitting piston (18) consists of a piston part (19) of greater diameter and a piston part (20) of lesser diameter, whereby a valve member consisting of a valve sleeve (21) is mounted for axial displacement on the piston part (20) and is coupled to a pressure transmitting piston (18) on the principle that upon displacement of the pressure transmitting piston (18) in a direction opposite to the piston (13, 15) there is an entrainment of the valve sleeve (21) and which has on its periphery an axial groove (22) via which pressurised medium can be passed from the passage (26) to the annular piston surface (19'') of the pressure transmitting piston (18).

## Revendications

1. Dispositif de fermeture de moule pour machine de moulage par injection, comprenant une plaque fixe d'ablocage de moule, portant une moitié d'outil une plaque mobile d'ablocage de moule, portant l'autre moitié d'outil, des broches motrices qui sont montées dans la plaque fixe d'ablocage de moule, à rotation libre et avec appui axial dans une direction, et qui sont montées dans la plaque mobile d'ablocage de moule, dans un écrou à broche fixé dans cette dernière, un entraînement en rotation pour actionner les broches motrices, en vue de la course de fermeture et d'ouverture de la plaque mobile d'ablocage de moule, et des vérins hydrauliques en liaison efficace avec les broches motrices, et affectés au développement d'une force de fermeture, caractérisé par le fait que le mouvement et la transmission de forces de la plaque mobile d'ablocage de moule sont assurés, lors de l'ouverture et de la fermeture en régime rapide, uniquement par l'intermédiaire des broches motrices (36, 38) ; et par le fait que les vérins hydrauliques comprennent un ou plusieurs piston(s) (13, 14, 15, 16) et des cylindres hydrauliques (9, 10, 11, 12), dont la sollicitation par un fluide pressurisé, pour le développement de la force de fermeture, a lieu par l'intermédiaire de vérins (45, 46 ; 62, 63) pouvant être entraînés par les broches motrices (36, 38), avec interposition d'un ou plusieurs dispositif(s) démultiplicateur(s) de pression.

2. Dispositif de fermeture de moule, selon la revendication 1, caractérisé par le fait
- que deux types de vérins (5, 6, 7, 8), fixés à la plaque mobile (4) d'ablocage de moule, traversent la plaque fixe (1) d'ablocage de moule et sont guidés dans cette dernière, dans des cylindres hydrauliques (9, 10, 11, 12), au moyen de pistons (13, 14, 15, 16), les vérins (6, 8) de l'un des types présentant un mécanisme à broche motrice, et le vérin (5, 7) de l'autre type présentant un dispositif démultiplicateur de pression,
- que les pistons (13, 14, 15, 16) subdivisent respectivement les cylindres hydrauliques (9, 10, 11, 12) en une chambre cylindrique (27, 28, 29, 30) située côté fermeture, et en une chambre cylindrique (31, 32, 33, 34) située côté ouverture,
- que toutes les chambres cylindriques (27, 28, 29, 30) situées côté fermeture sont reliées les unes aux autres par l'intermédiaire de canaux (35),
- que les dispositifs démultiplicateurs de pression comprennent respectivement un piston (18) démultiplicateur de pression, muni de surfaces de pistons différentiels (19' et 19''), un cylindre (17) démultiplicateur de pression et un corps d'obturation (21), le piston (18) démultiplicateur de pression subdivisant le cylindre (17) démultiplicateur de pression en une chambre (24) de démultiplication de pression, située côté fermeture, et en une chambre (25) de démultiplication de pression, située côté ouverture, et le corps d'obturation (21) pouvant occuper alternativement une position libérant et obturant un passage (26) partant de la chambre cylindrique (27, 28, 29, 30) située côté fermeture, et gagnant la chambre cylindrique (31, 33) située côté ouverture,
- que les mécanismes à broches motrices comprennent, à chaque fois, un écrou (39) à broche qui est fixé dans le piston (14, 16), et une broche motrice (36) qui est en prise par filetage avec ledit écrou, pénètre par une extrémité dans un évidement cylindrique (40) ménagé dans le vérin (6, 8) et traverse le cylindre hydraulique principal (10, 12) par l'autre extrémité, ladite broche étant guidée d'une part dans un second cylindre hydraulique (45), par un piston monobloc (46), et traversant d'autre part ledit second cylindre hydraulique (45) en étant accouplée, par la partie extrême (42), à un entraînement en rotation,
- que le piston monobloc (46) de chaque broche motrice (36) subdivise le second cylindre hydraulique (45) en une seconde chambre cylindrique (47) située côté fermeture, et en une seconde chambre cylindrique située côté ouverture,
- que, dans une première position fonctionnelle (mouvement de fermeture en régime rapide) d'un système hydraulique, un premier distributeur (49) à plusieurs voies peut être commuté à une position de commutation c dans laquelle la seconde chambre cylindrique (47), située côté fermeture, peut être raccordée à une source P de fluide pressurisé, et un second distributeur (51) à plusieurs voies peut être commuté à une position de commutation b impliquant l'interruption d'un conduit hydraulique (50) partant de la seconde chambre cylindrique (47) située côté fermeture, et gagnant la chambre cylindrique de pression (25) située côté ouverture, le piston (18) démultiplicateur de pression et la douille obturatrice (21) occupant une position de base libérant un passage (26),
- que, dans une deuxième position fonctionnelle (développement d'une pression de fermeture) du système hydraulique, la seconde chambre cylindrique (47) située côté fermeture peut être raccordée à la chambre (25) de démultiplication de pression qui est située côté ouverture, le premier distributeur (49) à plusieurs voies et le second distributeur (51) à plusieurs voies occupant, respectivement, la position de commutation b et la position de commutation a,
- que, dans une troisième position fonctionnelle (suppression de la pression) du système hydraulique, la seconde chambre cylindrique (47) située côté fermeture et la chambre (25) de démultiplication de pression, située côté ouverture, peuvent être commutées à l'état exempt de pression, le premier distributeur (49) à plusieurs voies et le second distributeur (51) à plusieurs voies occupant respectivement la position de commutation a, et
- que, dans une quatrième position fonctionnelle (mouvement d'ouverture en régime rapide) du système hydraulique, correspondant à la première position fonctionnelle, le premier distributeur (49) à plusieurs voies et le second distributeur (51) à plusieurs voies peuvent être commutés, respectivement, à la position de commutation c et à la position de commutation b.

3. Dispositif de fermeture de moule, selon la revendication 1, caractérisé par le fait que deux types de vérins (5, 6, 7, 8), fixés à la plaque mobile (4) d'ablocage de moule, traversent la plaque fixe (1) d'ablocage de moule et sont guidés dans cette dernière, dans des cylindres hydrauliques (9, 10, 11, 12), au moyen de pistons (13, 14, 15, 16), les vérins (6, 8) de l'un des types présentant un mécanisme à broche motrice, et le vérin (5, 7) de l'autre type présentant un dispositif démultiplicateur de pression,
- que les pistons (13, 14, 15, 16) subdivisent respectivement les cylindres hydrauliques (9, 10, 11, 12) en une chambre cylindrique (27, 28, 29, 30) située côté fermeture, et en une chambre cylindrique (31, 32, 33, 34) située côté ouverture,
- que toutes les chambres cylindriques (27, 28, 29, 30) situées côté fermeture sont reliées les unes aux autres par l'intermédiaire de canaux (35),
- que les dispositifs démultiplicateurs de pression comprennent respectivement un piston (18) démultiplicateur de pression, muni de surfaces de pistons différentiels (19' et 19''), un cylindre (17) démultiplicateur de pression et un corps d'obturation (21), le piston (18) démultiplicateur de pression subdivisant le cylindre (17) démultiplicateur de pression en une chambre (24) de démultiplication de pression, située côté fermeture, et en une chambre (25) de démultiplication de pression, située côté ouverture, et le corps d'obturation (21) pouvant occuper alternativement une position libérant et obturant un passage (26) partant de la chambre cylindrique (27, 28, 29, 30) située côté fermeture, et gagnant la chambre cylindrique (31, 33) située côté ouverture,
- que les mécanismes à broches motrices comprennent, à chaque fois, un écrou (39) à broche qui est fixé dans le piston (14, 16), et une broche motrice (36) qui est en prise par filetage avec ledit écrou, pénètre par une extrémité dans un évidement cylindrique (40) ménagé dans le vérin (6, 8) et traverse le cylindre hydraulique principal (10, 12) par l'autre extrémité, ladite broche étant guidée d'une part dans un second cylindre hydraulique (45), par un piston monobloc (46), et traversant d'autre part ledit second cylindre hydraulique (45) en étant accouplée, par la partie extrême (42), à un entraînement en rotation,
- que le piston monobloc (46) de chaque broche motrice (36) subdivise le second cylindre hydraulique (45) en une seconde chambre cylindrique (47) située côté fermeture, et en une seconde chambre cylindrique située côté ouverture,
- que, dans une première position fonctionnelle (mouvement de fermeture en régime rapide) d'un système hydraulique, un premier distributeur (49) à plusieurs voies peut être commuté à une position de commutation c dans laquelle la seconde chambre cylindrique (47), située côté fermeture, peut être raccordée à une source P de fluide pressurisé et un second distributeur (51) à plusieurs voies peut être commuté à une position de commutation b impliquant l'interruption d'un conduit hydraulique (50) partant de la seconde chambre cylindrique (47) située côté fermeture, et gagnant la chambre cylindrique de pression (25) située côté ouverture, le piston (18) démultiplicateur de pression et la douille obturatrice (21) occupant une position de base libérant un passage (26),
- que, dans une deuxième position fonctionnelle (développement d'une pression de fermeture) du système hydraulique, la seconde chambre cylindrique (47) située côté fermeture peut être raccordée à la chambre (25) de démultiplication de pression qui est située côté ouverture, le premier distributeur (49) à plusieurs voies et le second distributeur (51) à plusieurs voies occupant, respectivement, la position de commutation b et la position de commutation a,
- que, dans une troisième position fonctionnelle (suppression de la pression) du système hydraulique, la seconde chambre cylindrique (47) située côté fermeture et la chambre (25) de démultiplication de pression, située côté ouverture, peuvent être commutées à l'état exempt de pression, le premier distributeur (49) à plusieurs voies et le second distributeur (51) à plusieurs voies occupant respectivement la position de commutation a, et
- les mécanismes à broches motrices comprennent, à chaque fois, un écrou (39) à broche qui est fixé dans le piston (14, 16), et une broche motrice (38) qui est en prise par filetage avec ledit écrou, est guidée par une extrémité, par un piston (62), dans un cylindre (63) ménagé dans le vérin (6, 8), et traverse le cylindre hydraulique principal (10, 12) par l'autre extrémité, ladite broche étant guidée d'une part dans un second cylindre hydraulique (45), par un piston monobloc (46), et traversant d'autre part le second cylindre hydraulique (45) en étant accouplée, par la partie extrême (42), à un entraînement en rotation,
- que le piston monobloc (46) de chaque broche motrice (38) subdivise le second cylindre hydraulique (45) en une seconde chambre cylindrique (47) située côté fermeture, et en une seconde chambre cylindrique située côté ouverture,
- que, dans une première position fonctionnelle (mouvement de fermeture en régime rapide) d'un système hydraulique, un premier distributeur (64) à plusieurs voies peut être commuté à une position de commutation c dans laquelle la seconde chambre cylindrique (47), située côté fermeture, peut être sollicitée par du fluide pressurisé provenant de la source P de fluide pressurisé, un deuxième distributeur (65) à plusieurs voies peut être commuté à la position de commutation a dans laquelle le cylindre (63) de la broche peut être raccordé au réservoir T, et un troisième distributeur (66) à plusieurs voies peut être commuté à une position de commutation b impliquant une interruption du conduit hydraulique (67) gagnant le système démultiplicateur de pression,
- que, dans une deuxième position fonctionnelle (développement d'une pression de fermeture) du système hydraulique, le premier distributeur (64) à plusieurs voies peut être commuté à la position de commutation a dans laquelle le fluide pressurisé, renfermé par la seconde chambre cylindrique (47) située côté fermeture, peut se détendre vers le réservoir T, le deuxième distributeur (65) à plusieurs voies et le troisième distributeur (66) à plusieurs voies peuvent être commutés, respectivement, à la position de commutation b et à la position de commutation a dans lesquelles le distributeur (65) à plusieurs voies isole le conduit menant au réservoir T, et le distributeur (66) à plusieurs voies relie le cylindre (63) de la broche à la chambre (25) de démultiplication de pression qui est située côté ouverture,
- que, dans une troisième position fonctionnelle (suppression de la pression) du système hydraulique, le premier distributeur (64) à plusieurs voies peut être commuté à la position de commutation a dans laquelle le fluide pressurisé, renfermé par la seconde chambre cylindrique (47) située côté fermeture, peut se détendre vers le réservoir T, le deuxième distributeur (65) à plusieurs voies et le troisième distributeur (66) à plusieurs voies pouvant être respectivement commutés à la position de commutation a, d'où il résulte que la pression, provenant du cylindre (63) de la broche et de la chambre (25) de démultiplication de pression qui est située côté ouverture, peut se détendre vers le réservoir T, et
- que, dans une quatrième position fonctionnelle prévue pour l'ouverture en régime rapide, et correspondant à la première position fonctionnelle, le premier distributeur (64) à plusieurs voies peut être commuté à la position de commutation c dans laquelle la seconde chambre cylindrique (47), située côté fermeture, peut être raccordée à la source P de fluide pressurisé, le deuxième distributeur (65) à plusieurs voies peut être commuté à la position de commutation a dans laquelle de l'huile hydraulique peut être aspirée après coup dans le cylindre (63) de la broche, à partir du réservoir T, et le troisième distributeur (66) à plusieurs voies peut être commuté à une position de commutation b impliquant une interruption du conduit hydraulique (67) menant à la chambre (25) de démultiplication de pression qui est située côté ouverture.

4. Dispositif de fermeture de moule, selon l'une des revendications 1 à 3, caractérisé par le fait que la plaque fixe (1) d'ablocage de moule renferme quatre pistons (13, 14, 15, 16) de vérins (5, 6, 7, 8) dans lesquels se trouvent à chaque fois, diagonalement à l'opposé, deux mécanismes à broches motrices et deux dispositifs démultiplicateurs de pression.

5. Dispositif de fermeture de moule, selon l'une des revendications 1 à 4, caractérisé par le fait que le piston (18) démultiplicateur de pression se compose d'une partie de piston (19) de grand diamètre, et d'une partie de piston (20) de plus petit diamètre, cette dernière assurant le montage, avec faculté de coulissement axial, du corps d'obturation qui est constitué d'une douille obturatrice (21), est accouplé au piston (18) démultiplicateur de pression, de façon telle qu'un entraînement de la douille obturatrice (21) s'opère lors du coulissement dudit piston (18) démultiplicateur de pression dans une direction opposée au piston (13, 15), et présente, sur le pourtour, une gorge axiale (22) par l'intermédiaire de laquelle du fluide pressurisé peut être dirigé depuis le passage (26) jusqu'à la surface annulaire (19'') dudit piston (18) démultiplicateur de pression.

6. Dispositif de fermeture de moule pour machine de moulage par injection, comprenant une plaque fixe d'ablocage de moule, portant une moitié d'outil, une plaque mobile d'ablocage de moule, portant l'autre moitié d'outil, des broches motrices qui sont montées dans la plaque fixe d'ablocage de moule, à rotation libre et avec appui axial dans une direction, et qui sont montées dans la plaque mobile d'ablocage de moule, dans un écrou à broche fixé dans cette dernière, un entraînement en rotation pour actionner les broches motrices, en vue de la course de fermeture et d'ouverture de la plaque mobile d'ablocage de moule, et des vérins hydrauliques en liaison efficace avec les broches motrices, et affectés au développement d'une force de fermeture, caractérisé par le fait
- que deux types de vérins (5, 6, 7, 8), fixés à la plaque mobile (4) d'ablocage de moule, traversent la plaque fixe (1) d'ablocage de moule et sont guidés dans cette dernière, dans des cylindres hydrauliques (9, 10, 11, 12), au moyen de pistons (13, 14, 15, 16), les vérins (6, 8) de l'un des types présentant un mécanisme à broche motrice, et le vérin (5, 7) de l'autre type présentant un dispositif démultiplicateur de pression,
- que les pistons (13, 14, 15, 16) subdivisent respectivement les cylindres hydrauliques (9, 10, 11, 12) en une chambre cylindrique (27, 28, 29, 30) située côté fermeture, et en une chambre cylindrique (31, 32, 33, 34) située côté ouverture,
- que toutes les chambres cylindriques (27, 28, 29, 30) situées côté fermeture sont reliées les unes aux autres par l'intermédiaire de canaux (35),
- que les dispositifs démultiplicateurs de pression comprennent respectivement un piston (18) démultiplicateur de pression, muni de surfaces de pistons différentiels (19' et 19''), un cylindre (17) démultiplicateur de pression et un corps d'obturation (21), le piston (18) démultiplicateur de pression subdivisant le cylindre (17) démultiplicateur de pression en une chambre (24) de démultiplication de pression, située côté fermeture, et en une chambre (25) de démultiplication de pression, située côté ouverture, et le corps d'obturation (21) pouvant occuper alternativement une position libérant et obturant un passage (26) partant de la chambre cylindrique (27, 28, 29, 30) située côté fermeture, et gagnant la chambre cylindrique (31, 33) située côté ouverture,
- que les mécanismes à broches motrices comprennent, à chaque fois, un écrou (39) à broche qui est fixé dans le piston (14, 16) et une broche motrice (37) qui est en prise par filetage avec ledit écrou, pénètre par une extrémité dans un évidement cylindrique (40) pratiqué dans le vérin (6, 8) et traverse le cylindrique hydraulique (10, 12) par l'autre extrémité, ladite broche prenant appui d'une part au moyen d'un palier axial (41) et étant accouplée d'autre part à un entraînement en rotation, par la partie extrême (42),
- que, dans une première position fonctionnelle d'un système hydraulique, prévue pour l'exécution du mouvement de fermeture en régime rapide, un distributeur (56) à plusieurs voies peut être commuté à une position de commutation b dans laquelle la chambre (25) de démultiplication de pression, située côté ouverture, est raccordée au réservoir T pour l'essentiel sans aucune pression,
- que, dans une deuxième position fonctionnelle du système hydraulique, prévue pour le développement d'une force de fermeture et dans laquelle les moitiés d'outil (2 et 3) sont en contact l'une avec l'autre, le distributeur (56) à plusieurs voies peut être commuté à une position de commutation c dans laquelle, par l'intermédiaire du conduit hydraulique (58), la chambre (25) de démultiplication de pression du dispositif démultiplicateur de pression, qui est située côté ouverture, est raccordée à la source P de fluide pressurisé,
- que, dans une troisième position fonctionnelle du système hydraulique, prévue pour la suppression de pression, le distributeur (56) à plusieurs voies peut être commuté à une position de commutation a dans laquelle le fluide pressurisé, provenant de la chambre (25) de démultiplication de pression qui est située côté ouverture, peut se détendre vers le réservoir T en empruntant des conduits hydrauliques (58 et 60), et
- que, dans une quatrième position fonctionnelle du système hydraulique, prévue pour le mouvement d'ouverture en régime rapide, le distributeur (56) à plusieurs voies peut être commuté à une position de commutation b dans laquelle le dispositif démultiplicateur de pression est maintenu dans une position dégageant le passage (26).

7. Dispositif de fermeture de moule, selon la revendication 6, caractérisé par le fait que la plaque fixe (1) d'ablocage de moule renferme quatre pistons (13, 14, 15, 16) de vérins (5, 6, 7, 8) dans lesquels se trouvent à chaque fois, diagonalement à l'opposé, deux mécanismes à broches motrices et deux dispositifs démultiplicateurs de pression.

8. Dispositif de fermeture de moule, selon l'une des revendications 6 ou 7, caractérisé par le fait que le piston (18) démultiplicateur de pression se compose d'une partie de piston (19) de grand diamètre, et d'une partie de piston (20) de plus petit diamètre, cette dernière assurant le montage, avec faculté de coulissement axial, du corps d'obturation qui est constitué d'une douille obturatrice (21), est accouplé au piston (18) démultiplicateur de pression, de façon telle qu'un entraînement de la douille obturatrice (21) s'opère lors du coulissement dudit piston (18) démultiplicateur de pression dans une direction opposée au piston (13, 15), et présente, sur le pourtour, une gorge axiale (22) par l'intermédiaire de laquelle du fluide pressurisé peut être dirigé depuis le passage (26) jusqu'à la surface annulaire (19'') dudit piston (18) démultiplicateur de pression.
